# EUROPÄISCHE PATENTSCHRIFT

(11) **EP 2 501 980 B1**
(45) Veröffentlichungstag und Bekanntmachung des Hinweises auf die Patenterteilung: **21.08.2013**
(21) Anmeldenummer: 10728220.4
(22) Anmeldetag: 29.06.2010
(51) Int. Cl.: F16L 37/14

(54) **ANSCHLUSSVORRICHTUNG**
CONNECTION DEVICE
DISPOSITIF DE RACCORDEMENT

(30) Priorität: 18.11.2009 DE 102009053695
(43) Veröffentlichungstag der Anmeldung: 26.09.2012
(73) Patentinhaber: Mahle International GmbH, 70376 Stuttgart (DE)
(72) Erfinder: BUNDY, Gabriel, R-300488 Timisoara (RO); FALLSCHEER, Thomas, 70329 Stuttgart (DE); PRÖTTEL, Thomas, 73728 Esslingen (DE)
(74) Vertreter: BRP Renaud & Partner
(86) Internationale Anmeldenummer: PCT/EP2010/059197
(87) Internationale Veröffentlichungsnummer: WO 2011/060968

(56) Entgegenhaltungen:
- EP-A1- 1 845 299
- US-A- 4 697 947

## Beschreibung

Die vorliegende Erfindung betrifft eine Anschlussvorrichtung für einen eine ringförmige Außennut aufweisenden Steckabschnitt einer schlauchförmigen oder rohrförmigen Leitung oder eines Stutzens, mit den Merkmalen des Oberbegriffs des Anspruchs 1.

Aus der EP 1 845 299 B1 ist eine Anschlussvorrichtung dieser Art bekannt. Sie umfasst ein Gehäuse, in welches der Steckabschnitt einsteckbar ist. Die bekannte Anschlussvorrichtung weist außerdem ein Sperrelement auf, mit dem der in das Gehäuse eingesteckte Steckabschnitt im Gehäuse arretierbar ist. Das Sperrelement greift zum Arretieren des Steckabschnitts im Gehäuse in die Außennut des Steckabschnitts und in eine im Gehäuse ausgebildete ringförmige Innennut ein. Das Sperrelement ist durch eine Gehäuseöffnung im Wesentlichen tangential zu den Nuten aus diesen herausziehbar. Ferner ist das Sperrelement in der Innennut vormontierbar und erlaubt im vormontierten Zustand unter elastischer Auslenkung das Einsstecken des Steckabschnitts in das Gehäuse, wobei dann das Sperrelement in die Außennut einrastet. Des Weiteren ist bei der Anschlussvorrichtung das Sperrelement im vormontierten Zustand am Gehäuse gegen ein Verschieben in der Umfangsrichtung gesichert.

Des Weiteren ist bei der bekannten Anschlussvorrichtung das Sperrelement mit einer bandförmigen Seele und mehreren, in der Umfangsrichtung benachbarten, entlang der Seele angeordneten Zähnen ausgestattet, die jeweils einen im eingesteckten Zustand mit der Innennut zusammenwirkenden äußeren Zahnabschnitt sowie einen im eingesteckten Zustand mit der Außennut zusammenwirkenden inneren Zahnabschnitt aufweisen. Diese inneren und äußeren Zahnabschnitte stehen an sich gegenüberliegenden Seiten von der Seele ab, wobei die Seele zumindest zwischen benachbarten Zähnen im Querschnitt ein Seelenprofil aufweist, das eine durch einen Maximaldurchmesser bestimmte Hauptrichtung aufweist, während die Zähne im Querschnitt jeweils ein Zahnprofil aufweisen, das eine durch eine radial innen liegende Innenflanke der Zähne bestimmte Zahnhauptrichtung besitzt. Bei der bekannten Anschlussvorrichtung verlaufen die Seelenhauptrichtung und die Zahnhauptrichtung parallel zueinander.

Weitere Anschlussvorrichtungen, die ein Gehäuse, einen Steckabschnitt und ein Sperrelement umfassen, sind bspw. aus der US 6,179,347 B1 und aus der US 3,606,402 bekannt.

Die vorliegende Erfindung beschäftigt sich mit dem Problem, für eine Anschlussvorrichtung der eingangs genannten Art eine verbesserte Ausführungsform anzugeben, die sich insbesondere durch eine vereinfachte Handhabung und/oder durch eine erhöhte Belastbarkeit bzw. Zuverlässigkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Zähne des Sperrelements im Profil gegenüber der Seele des Sperrelements geneigt anzuordnen. Erreicht wird dies dadurch, dass das Sperrelement so hergestellt wird, dass die Seelenhauptrichtung gegenüber der Zahnhauptrichtung geneigt ist. Die Erfindung nutzt hierbei die Erkenntnis, dass es beim Einsteckend des Steckabschnitts sowie bei der Übertragung von Zugkräften zwischen Gehäuse und Steckabschnitt zu einer Biegebeanspruchung der Seele kommt. Durch Neigen der Seelenhauptrichtung gegenüber der Zahnhauptrichtung kann diese Biegebeanspruchung signifikant reduziert werden, was die Belastung des Sperrelements reduziert und die Dauerhaltbarkeit des Sperrelements verlängert und somit die Zuverlässigkeit der Anschlussvorrichtung verbessert.

Dabei hat sich als besonders vorteilhaft erwiesen, die Seelenhauptrichtung in Richtung zu einer Axialrichtung gegenüber der Zahnhauptrichtung zu neigen, wobei auch die Zahnhauptrichtung gegenüber der Axialrichtung geneigt ist. Bevorzugt ist die Seelenhauptrichtung so orientiert, dass sie auch gegenüber der Axialrichtung geneigt ist, wobei dann die Seelenhauptrichtung gegenüber der Axialrichtung in der einen Richtung geneigt ist, während die Zahnhauptrichtung gegenüber der Axialrichtung in der anderen Richtung geneigt ist.

Das Sperrelement kann gemäß einer vorteilhaften Ausführungsform einen im vormontierten Zustand außen am Gehäuse anliegenden außen liegenden Endabschnitt aufweisen. Dieser außen liegende Endabschnitt vereinfacht die Handhabung der Anschlussvorrichtung, insbesondere zum Herausziehen des Sperrelements, also zum Lösen der Verbindung zwischen Gehäuse und Steckabschnitt.

Gemäß einer besonders vorteilhaften Weiterbildung kann nun das Sperrelement zwischen dem außen liegenden Endabschnitt und dem in der Innennut verlaufenden Bereich einen verwundenen Übergangsabschnitt aufweisen. In diesem Übergangsabschnitt erfolgt eine Aufrichtung der Hauptrichtung des Sperrelementprofils ausgehend von der Seelenhauptrichtung in Richtung zum außen liegenden Endabschnitt gegenüber der Axialrichtung. Insbesondere kann sich die Hauptrichtung des Sperrelementprofils im außen liegenden Endabschnitt im Wesentlichen parallel zur Axialrichtung erstrecken. Dieser verwundene Übergangsabschnitt ermöglicht eine besonders raumsparende, kompakte Bauform für die Anschlussvorrichtung, da insbesondere ein flächiges Anliegen des außen liegenden Endabschnitts am Gehäuse realisierbar ist.

Gemäß einer anderen vorteilhaften Ausführungsform kann die Seele vom außen liegenden Endabschnitt bis zum ersten Zahn einen sich bis in die Innennut hinein erstreckenden zahnlosen Seelenabschnitt aufweisen. Es hat sich gezeigt, dass durch die Bereitstellung eines derartigen zahnlosen Seelenabschnitts das Herausziehen des Sperrelements zum Entsichern der Verbindung zwischen Steckabschnitt und Gehäuse erheblich vereinfacht wird.

Entsprechend einer anderen vorteilhaften Ausführungsform, die auch eine selbständige Lösung des vorliegenden Problems repräsentieren kann, kann außen am Gehäuse eine Abdeckung vorgesehen sein, die zumindest die Gehäuseöffnung radial abdeckt. Mit Hilfe einer derartigen Abdeckung kann zum Einen ein ungewollter Zugriff zum Sperrelement vermieden werden. Zum Anderen kann das Eindringen von Schmutz durch die Gehäuseöffnung in die Nuten vermindert werden. Insgesamt kann mit Hilfe der Abdeckung die Funktionalität sowie die Dauerhaltbarkeit der Anschlussvorrichtung verbessert werden. Entsprechend vorteilhaften Ausführungsformen kann sich besagte Abdeckung auch über einen außen am Gehäuse anliegenden Endabschnitt des Sperrelements erstrecken, also zusätzlich auch besagten außen liegenden Endabschnitt radial abdecken. Hierdurch wird die Sicherung vor einer ungewollten Betätigung des Sperrelements verbessern.

Entsprechend einer anderen Ausführungsform kann die Sicherungseinrichtung eine außen am Gehäuse angeordnete Vertiefung aufweisen, in die ein Vorsprung eingreift, der von einem außenliegenden Ende des Sperrelements nach innen absteht. Hierdurch wird ein in Umfangsrichtung wirkender Formschluss zwischen dem Gehäuse und dem Sperrelement erzeugt, der das Sperrelement relativ zum Gehäuse positioniert. Darüber hinaus vereinfacht der Vorsprung das manuelle Herausziehen des Sperrelements. Somit kann durch diese Bauweise die Handhabung der Anschlussvorrichtung verbessert werden.

Entsprechend einer alternativen bzw. selbständigen Lösung, die optional realisiert werden kann, und zwar zusätzlich zu wenigstens einem der vorstehend genannten Merkmale, und für die auch unabhängig Schutz beansprucht wird, kann zumindest einer der Zähne gegenüber den anderen normalen Zähnen hinsichtlich seiner Geometrie und/oder hinsichtlich seiner Ausrichtung gegenüber der Seele unterschiedlich sein. Insbesondere kann dabei vorgesehen sein, dass der wenigstens eine spezielle Zahn so gestaltet bzw. angeordnet ist, dass er sich im vormontierten Zustand bzw. im eingesteckten Zustand in der Einsteckrichtung des Steckabschnitts in der Innennut axial am Gehäuse abstützt. Durch diesen Vorschlag wird erreicht, dass sich das Sperrelement während des Steckvorgangs in Axialrichtung nicht so weit gegenüber dem Gehäuse verschieben kann, dass die anderen oder normalen Zähne, die radial nach innen aus der Innennut vorstehen, axial über den Rand der Innennut vorstehen können, was zu einer Verklemmung mit dem Steckabschnitt führen würde. Die hier vorgestellte Maßnahme führt somit zu einer erhöhten Zuverlässigkeit der Anschlussvorrichtung.

Beispielsweise kann der wenigstens eine spezielle Zahn so gestaltet bzw. angeordnet sein, dass er sich im eingesteckten Zustand mit seinem inneren Zahnabschnitt in der Innennut am Gehäuse abstützt, während sich die anderen normalen Zähne mit ihren inneren Zahnabschnitten ausschließlich in der Außennut am Steckabschnitt abstützen.

Bei einer anderen vorteilhaften Ausführungsform kann die Außennut quer zur Umfangsrichtung ein Rampenprofil aufweisen, das in der Einsteckrichtung des

Steckabschnitts abfällt. Hierdurch wird eine gezielte Ausrichtung der Abstützung des Sperrelements bei einer Zugkraftbelastung zwischen Gehäuse und Steckabschnitt erzeugt. Diese Ausrichtung wirkt dabei einem Aufrichten der Zähne entgegen, die zu einer radialen Belastung und Aufweitung des Gehäuses führen würde.

Vorteilhaft kann dabei die Außennut an einem innenliegenden Ende des Rampenprofils eine Vertiefung aufweisen, die so dimensioniert ist, dass die Zähne mit ihren inneren Zahnabschnitten in der Vertiefung radial freistehend angeordnet sind. Durch diese Maßnahme wird erreicht, dass sich die Zähne radial nur im Bereich des Rampenprofils abstützen können, was die Tendenz zur Aufrichtung der Zähne im Falle einer Zugbelastung zusätzlich reduziert. Besonders zweckmäßig ist dabei eine Ausführungsform, bei welcher die Vertiefung im Profil kleiner dimensioniert ist als die inneren Zahnabschnitte. So wird verhindert, dass die Zähne mit ihren inneren Zahnabschnitten in die Vertiefung bis zu deren Grund eindringen können.

Bei einer anderen vorteilhaften Ausführungsform kann das Gehäuse außen zumindest eine sich in Umfangsrichtung erstreckende Umfangsrippe aufweisen, was zu einer signifikanten Aussteifung des Gehäuses führt. Hierdurch wird die Anschlussvorrichtung für die Zugbelastung versteift. Vorzugsweise kann die Umfangsrippe an einem die Einstecköffnung zum Einstecken des Steckabschnitts aufweisenden freien Ende des Gehäuses angeordnet sein. Bevorzugt sind zumindest zwei axial voneinander beabstandete Umfangsrippen vorgesehen, was die Aussteifung des Gehäuses, insbesondere im Bereich des freien Endes, verbessert.

Von besonderem Vorteil ist eine Ausführungsform, bei welcher die Innennut axial zwischen zwei solchen Umfangsrippen angeordnet ist. Hierdurch wird das Gehäuse gezielt im Bereich der Innennut ausgesteift und stabilisiert.

Optional können am Gehäuse außen mehrere sich in Längsrichtung erstreckende Längsrippen vorgesehen sein, die insbesondere jeweils zumindest zwei Umfangsrippen miteinander verbinden. Auch die Längsrippen sorgen für eine intensive Aussteifung des Gehäuses, insbesondere im Bereich der Innennut.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen halben Längsschnitt einer Anschlussvorrichtung,
- Fig. 2: einen Querschnitt der Anschlussvorrichtung im Bereich eines Sperrelements,
- Fig. 3: eine perspektivische Ansicht eines Gehäuses der Anschlussvorrichtung,
- Fig. 4: eine perspektivische Ansicht des Sperrelements,
- Fig. 5: eine teilweise perspektivische Detailansicht der Anschlussvorrichtung im Längsschnitt im Bereich des Sperrelements,
- Fig. 6: eine Ansicht wie in Fig. 5, jedoch bei einer anderen Ausführungsform,
- Fig. 7: eine Teilansicht wie in Fig. 3, im Bereich einer Sicherungseinrichtung,
- Fig. 8: eine Seitenansicht der Anschlussvorrichtung im Bereich der Sicherungseinrichtung,
- Fig. 9: eine Ansicht wie in Fig. 8, jedoch bei einer anderen Ausführungsform,
- Fig. 10: eine vergrößerte Detailansicht des Sperrelements,
- Fig. 11: einen Längsschnitt des Sperrelements,
- Fig. 12: einen Querschnitt der Anschlussvorrichtung im Bereich einer Sicherungseinrichtung,
- Fig. 13: eine perspektivische Ansicht eines Gehäuses der Anschlussvorrichtung,
- Fig. 14 bis 17: Längsschnitte der Anschlussvorrichtung im Bereich eines Sperrelements, bei verschiedenen Ausführungsformen.

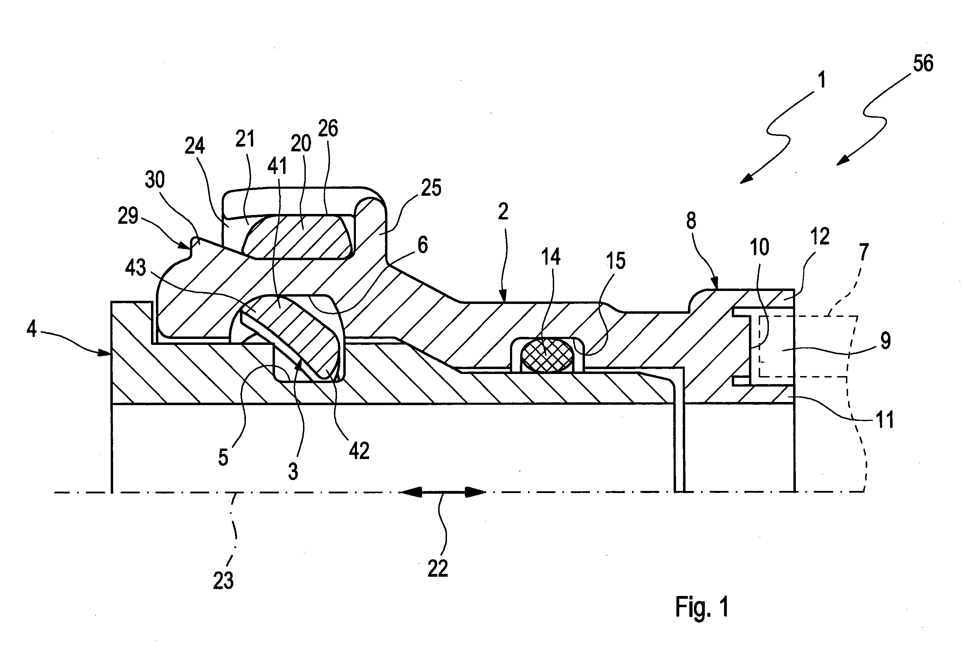

Entsprechend den Fig. 1 bis 17 und insbesondere mit Bezug auf Fig. 1 umfasst eine Anschlussvorrichtung 1 ein Gehäuse 2 sowie ein Sperrelement 3. Die Anschlussvorrichtung 1 ist zum Herstellen eines Anschlusses für einen Steckabschnitt 4 vorgesehen. Der Steckabschnitt 4 ist bei den hier gezeigten Ausführungsformen als Stutzen ausgestaltet. Ebenso ist es möglich, den Steckabschnitt 4 als schlauchförmige oder rohrförmige Leitung auszugestalten oder als Endabschnitt eines Schlauchs oder eines Rohrs auszugestalten. Dieser Steckabschnitt 4 weist an seiner Außenseite eine ringförmige Außennut 5 auf.

Die Anschlussvorrichtung 1 kommt bevorzugt in Kraftfahrzeugen zum Einsatz, z.B. in einer Frischluftanlage des Fahrzeugs zur Versorgung einer Brennkraftmaschine des Fahrzeugs mit Frischluft.

Der Steckabschnitt 4, insbesondere in Form des Stutzens, kann bei einer speziellen Ausführungsform an einem Saugmodul, insbesondere einer Frischluftanlage, oder an einem Filtergehäuse, insbesondere zur Luftfiltration, z.B. in einer Frischluftanlage, angeordnet sein, z.B. verschraubt, verschweißt oder verclipst. Besonders vorteilhaft kann eine Ausführungsform sein, bei welcher der Steckabschnitt 4, z.B. in Form des Stutzens, integral, z.B. mittels Kunststoffspritzguss, am Saugmodul oder am Filtergehäuse ausgeformt ist.

Das Gehäuse 2 ist so ausgestaltet, dass der Steckabschnitt 4 in das Gehäuse 2 einsteckbar ist. Ferner weist das Gehäuse 2 an seiner Innenseite eine ringförmige Innennut 6 auf. Das Gehäuse 2 ist hülsenförmig ausgestaltet. Es kann als Stutzen konzipiert sein. Ebenso kann es als Endstück für eine in Fig. 1 mit unterbrochener Linie angedeutete rohrförmige oder schlauchförmige Leitung 7 konzipiert sein.

Besagte Leitung 7 kann bspw. als Blasformteil konzipiert sein, das stirnseitig mit dem Gehäuse 2 verbunden werden kann. Als Verbindung eignet sich bspw. eine Schweißverbindung, insbesondere eine Reibschweißverbindung. Im Beispiel der Fig. 1 ist das Gehäuse an seinem vom Sperrelement 3 entfernten Ende mit einem Anschlussbereich 8 versehen, der sich in besonderer Weise zum Herstellen einer Reibschweißverbindung eignet. Insbesondere umfasst dieser Anschlussbereich 8 eine axiale Ringnut 9, die am Nutgrund einen in die Nut 9 vorstehenden Vorsprung 10 aufweist, der sowohl zu einer Innenwand 11 als auch zu einer Außenwand 12 der Nut 9 beabstandet ist. Beim Reibschweißen schmilzt dieser Vorsprung 10 zumindest teilweise auf, wodurch die Lücken zwischen dem Vorsprung 10 und den Wänden 11, 12, zumindest teilweise ausgefüllt werden.

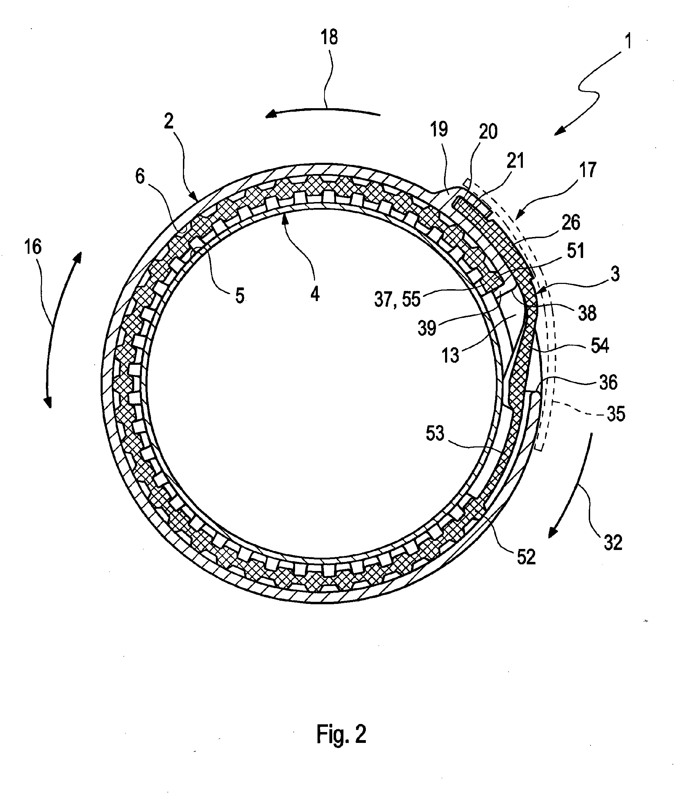

Das Sperrelement 3 dient zum Arretieren des in das Gehäuse 2 eingesteckten Steckabschnitts 4 am Gehäuse 2. Hierzu greift das Sperrelement 3 einerseits in die Außennut 5 des Steckabschnitts 4 und andererseits in die Innennut 6 des Gehäuses 2 ein. Des Weiteren weist das Gehäuse 2 eine zumindest in den Fig. 2, 3 und 7 erkennbare Gehäuseöffnung 13 auf, die das Gehäuse 2 radial durchsetzt. Durch diese Gehäuseöffnung 13 hindurch kann das Sperrelement 3 aus der Innennut 6 und aus der Außennut 5 herausgezogen werden. Durch Herausziehen des Sperrelements 3 aus der Anschlussvorrichtung 1 kann die mittels des Sperrelements 3 hergestellte Verrastung zwischen Steckabschnitt 4 und Gehäuse 2 aufgehoben werden, wodurch die Verbindung gelöst ist und der Steckabschnitt 4 aus dem Gehäuse 2 herausgezogen werden kann.

Das Sperrelement 3 ist außerdem in der Innennut 6 vormontierbar. Das heißt, das Sperrelement 3 kann in der Innennut 6 so montiert werden, dass es auch bei fehlendem Steckabschnitt 4 in der Innennut 6 bzw. am Gehäuse 2 verbleibt. In diesem vormontierten Zustand erlaubt das Sperrelement 3 das Einstecken des Steckabschnitts 4 in das Gehäuse 2. Hierbei kommt es zu einer elastischen Verformung bzw. Auslenkung des Sperrelements 3 sowie zu einer Verrastung mit der Außennut 5, wenn der Steckabschnitt 4 eine vorgesehene Einstecktiefe erreicht.

In Fig. 1 ist außerdem eine Dichtung 14 dargestellt, die bspw. als O-Ring ausgestaltet sein kann. Im Beispiel der Fig. 1 ist die Dichtung 14 in eine weitere, an der Innenseite des Gehäuses 2 ausgebildete ringförmige Innennut 15 eingesetzt, die beabstandet zu der dem Sperrelement 3 zugeordneten Innennut 6 angeordnet und zwischen besagter Innennut 6 und dem Anschlussabschnitt 8 positioniert ist.

Im vormontierten Zustand ist das Sperrelement 3 am Gehäuse 2 gegen ein Verschieben in der Umfangsrichtung, die in Fig. 2 durch einen Doppelpfeil angedeutet und mit 16 bezeichnet ist, gesichert. Diese Verschiebesicherung des Sperrelements 3 kann mit Hilfe einer Sicherungseinrichtung 17 realisiert werden. Diese Sicherungseinrichtung 17 ist dabei außen am Gehäuse 2 angeordnet. Sie sichert das Sperrelement 3 gegen eine Verschiebung relativ zum Gehäuse 2 in der Umfangsrichtung 16 zumindest in der in Fig. 2 durch einen Pfeil angedeuteten Auszugsrichtung 18.

Die Sicherungseinrichtung 17 umfasst zweckmäßig einen Außenanschlag 19, der außen am Gehäuse 2 angeordnet ist. Im vormontierten Zustand liegt dieser Außenanschlag 19 einem außen liegenden Ende 20 des Sperrelements 3 in der Auszugsrichtung 18 gegenüber. Besonders zweckmäßig ist die hier gezeigte Ausführungsform, bei welcher die Sicherungseinrichtung 17 des Weiteren mit einer Aufnahmetasche 21 ausgestattet ist, die ebenfalls außen am Gehäuse 2 angeordnet ist. Im vormontierten Zustand ist in diese Aufnahmetasche 21 das außen liegende Ende 20 des Sperrelements 3 eingesteckt. Zweckmäßig kann in dieser Aufnahmetasche 21 der vorstehend genannte Außenanschlag 19 ausgebildet sein. Dementsprechend liegt das außen liegende Ende 20 im vormontierten Zustand innerhalb der Aufnahmetasche 21 dem Außenanschlag 19 in der Umfangsrichtung 16 gegenüber.

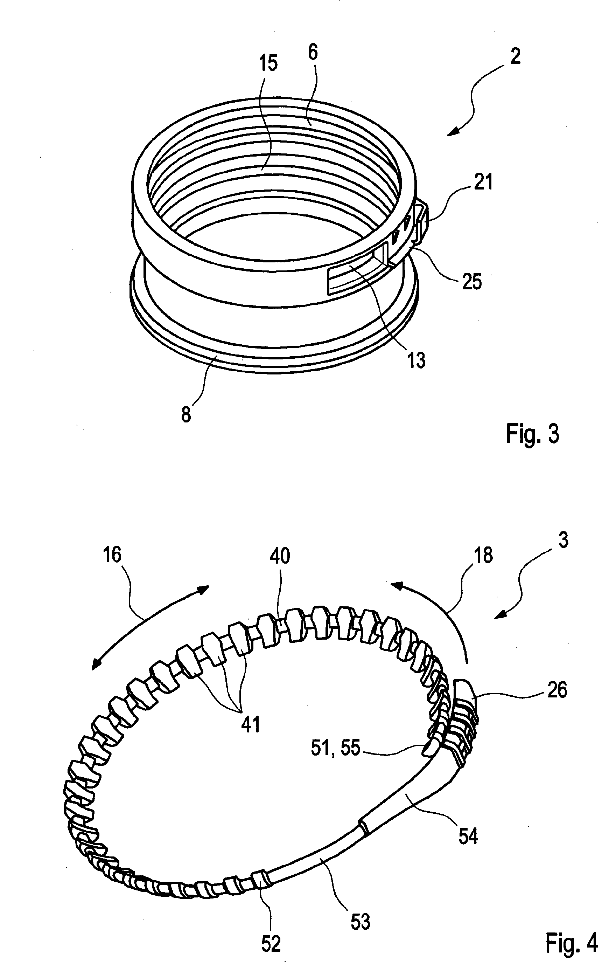

Entsprechend den Fig. 3, 5 und 7 bis 9 ist die Aufnahmetasche 21 gemäß bevorzugter Ausführungsformen an einer Axialseite offen. Die Axialrichtung der Anschlussvorrichtung 1 ist zum Beispiel in Fig. 1 durch einen Doppelpfeil angedeutet und mit 22 bezeichnet. Sie liegt dabei auf einer Längsmittelachse 23 des Gehäuses 2 bzw. der Vorrichtung 1. Durch die axial offene Seite der Aufnahmetasche 21 wird eine axiale Öffnung 24 oder offene Axialseite 24 gebildet, die in Fig. 1 erkennbar ist und die bspw. vom Anschlussabschnitt 8 abgewandt ist. Das außen liegende Ende 20 des Sperrelements 3 kann durch diese Öffnung 24, also durch die offene Axialseite 24 in die Aufnahmetasche 21 eingesteckt werden bzw. daraus herausgezogen werden. Die Verstellbewegung des außen liegenden Endes 20 des Sperrelements 3 zum Sichern in der Aufnahmetasche 21 bzw. zum Entsichern erfolgt dabei axial, also quer zur Umfangsrichtung 16 und somit quer zur Auszugsrichtung 18. Hierdurch wird eine besonders effektive Sicherung des Sperrelements 3 im vormontierten Zustand realisiert.

Bei den hier gezeigten Ausführungsformen ist die Aufnahmetasche 21 gegenüber der offenen Axialseite 24, also gegenüber der Öffnung 24 geschlossen ausgestaltet. Ferner ist die Aufnahmetasche 21 in der Umfangsrichtung, und zwar in Richtung zur Gehäuseöffnung 15 mit Hilfe eines Auflagestegs 25 verlängert. Entsprechend den Fig. 1, 8 und 9 kann im vormontierten Zustand ein außen liegender Endabschnitt 26 des Sperrelements 3, der das außen liegende Ende 20 aufweist, an diesem Auflagesteg 25 axial zur Anlage kommen. Hierdurch ergibt sich für den vormontierten Zustand eine axiale Lagesicherung für den außen liegenden Endabschnitt 26.

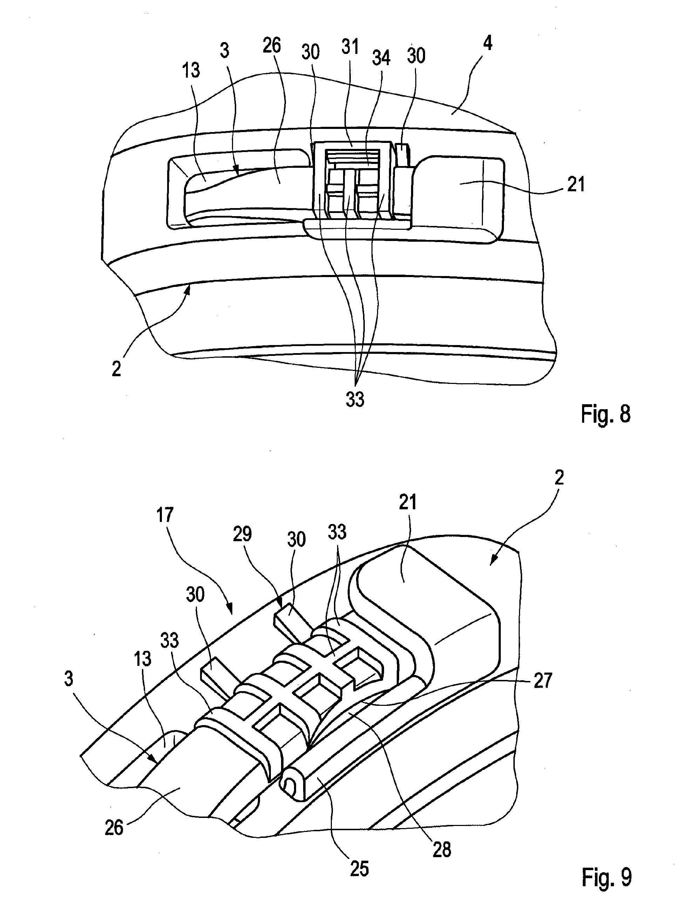

Gemäß Fig. 8 kann der außen liegende Endabschnitt 26 im Wesentlichen flächig am Auflagesteg 25 zur Anlage kommen. Alternativ dazu zeigt Fig. 9 eine Ausführungsform, bei welcher das Sperrelement 3 an seinem außen liegenden Endabschnitt 26 eine axial orientierte Einbuchtung 27 aufweisen, die so positioniert ist, dass sich im vormontierten Zustand zwischen dem Endabschnitt 26 und dem Auflagesteg 25 ein Schlitz 28 ausbildet, der so dimensioniert ist, dass er als Werkzeugeingriff verwendet werden kann. Beispielsweise kann in den Schlitz 28 ein flacher Schraubendreher eingesteckt werden, um durch Hebeln oder Verdrehen den Endabschnitt 26 aus der Aufnahmetasche 21 seitlich, also axial, herauszubewegen.

Die Sicherungseinrichtung 17 kann zusätzlich oder alternativ zu den vorbeschriebenen Merkmalen mit einer Rasteinrichtung 29 ausgestattet sein. Diese Rasteinrichtung 29 umfasst zumindest eine Raste 30. Bei den hier gezeigten Ausführungsformen sind jeweils zwei derartige Rasten 30 vorgesehen. Die jeweilige Raste 30 wirkt im vormontierten Zustand mit dem außen liegenden Endabschnitt 26 des Sperrelements 3 zusammen. Dabei behindert die jeweilige Raste 30 ein axiales Verstellen dieses außen liegenden Endabschnitts 26 relativ zum Gehäuse 2. Im Beispiel sind die Rasten 30 als Rampen ausgestaltet, die in Richtung zum Auflagesteg 25 abfallen.

Das Sperrelement 3 kann gemäß der in Fig. 8 gezeigten Ausführungsform an seinem außen liegenden Endabschnitt 26 einen axial abstehenden Bereich 31 aufweisen. Sofern wie hier zwei Rasten 30 vorgesehen sind, können die Abmessung dieses axial abstehenden Bereichs 31 und der Abstand zwischen den beiden Rasten 30 so aufeinander abgestimmt sein, dass im vormontierten Zustand die beiden Rasten 30 beiderseits des abstehenden Bereichs 31 angeordnet sind und dadurch eine zusätzliche Sicherung des Sperrelements 3 in der Umfangsrichtung 16 bewirken, und zwar sowohl in der Auszugsrichtung 18 als auch in der in Fig. 2 durch einen Pfeil angedeuteten Einsteckrichtung 32.

Wie bspw. den Fig. 4, 8 und 9 entnehmbar ist, kann der außen liegende Endabschnitt 26 des Sperrelements 3 mit radialen Vorsprüngen 33 bzw. Erhebungen 33 ausgestattet sein, die bspw. nach Art einer Verrippung gestaltet sein können. Hierzu erstrecken sich die Vorsprünge 33 in Axialrichtung 22 oder in Umfangsrichtung 16. Durch diese Vorsprünge 33 wird die manuelle Greifbarkeit des Endabschnitts 26 signifikant verbessert. Des Weiteren kann zusätzlich oder alternativ zu derartigen Vorsprüngen 33 gemäß Fig. 8 im außen liegenden Endabschnitt 26, und insbesondere im axial abstehenden Bereich 31 zumindest ein radialer Schlitz 34 vorgesehen sein. Auch dieser Schlitz 34 kann wie der in Fig. 9 gezeigte Schlitz 28 als Werkzeugeingriff konzipiert sein, um bspw. mittels eines flachen Schraubendrehers den Endabschnitt 26 axial aus seiner Sicherung heraus bewegen zu können.

In Fig. 2 ist mit unterbrochener Linie außerdem eine Abdeckung 35 angedeutet, die optional vorgesehen sein kann. Diese Abdeckung 35 befindet sich außen am Gehäuse 2. Sie kann außen an die Tasche 21 angesetzt sein oder integral daran ausgeformt sein. Im vormontierten Zustand kann diese Abdeckung 35 das Sperrelement 3 zumindest im Bereich der Gehäuseöffnung 13 radial abdecken. Im gezeigten Beispiel deckt die Abdeckung 35 auch die Sicherungseinrichtung 17 zumindest teilweise ab. Alternativ ist es ebenso möglich, die Abdeckung 35 bezüglich der Sicherungseinrichtung 17 an der gegenüberliegenden Seite der Gehäuseöffnung 13 am Gehäuse 2 anzubringen, bzw. integral dran auszuformen. Alternativ ist es ebenso möglich, die Abdeckung 35 bezüglich des Gehäuses 2 als separates Bauteil zu konzipieren. Insbesondere kann die Abdeckung 35 dann als Klipp konzipiert sein, der am Gehäuse 2, insbesondere im Bereich der Gehäuseöffnung 13 anbringbar ist. Beispielsweise durch greifende, federnde Klipparme die Gehäuseöffnung 13 in radialer Richtung, um eine Berandung der Gehäuseöffnung 13 zu hintergreifen.

Wie den hier gezeigten Ausführungsformen entnehmbar ist, kann die Gehäuseöffnung 13 in der Umfangsrichtung 16 größer sein als in der Axialrichtung 22. Insbesondere ist die Gehäuseöffnung 13 zumindest in der Umfangsrichtung 16 zumindest zweimal größer als in der Axialrichtung 22. Hierdurch kann eine Biegebeanspruchung des Sperrelements 3 bei einem tangentialen Herausziehen aus der Gehäuseöffnung 13 reduziert werden. Zweckmäßig kann die Gehäuseöffnung 13 in der Umfangsrichtung 16 gleich groß sein wie der im vormontierten Zustand außen liegende Endabschnitt 26 des Sperrelements 3. Die Abmessung in der Umfangsrichtung 16 der Gehäuseöffnung 13 einerseits und des außen liegenden Endabschnitts 26 andererseits sind dabei im Rahmen üblicher Herstellungstoleranzen gleich oder etwa gleich, wobei Maßabweichungen von +/- 10% tolerierbar sind.

Die Gehäuseöffnung 13 kann entsprechend einer bevorzugten Ausführungsform ein erstes Ende 36 aufweisen, das im vormontierten Zustand relativ zu einem innenliegenden Ende 37 des Sperrelements 3 distal angeordnet ist. Dieses erste Ende 36 der Gehäuseöffnung 13 ist als radial verlaufender erster Rand ausgestaltet, der von der Innennut 6 direkt radial zu der Außenseite des Gehäuses 2 führt. Mit anderen Worten, die Gehäuseöffnung 13 ist distal zum innen liegenden Ende 37 des Sperrelements 3 mit einem radial orientierten Rand, der durch das erste Ende 36 gebildet ist, begrenzt. Ferner weist die Gehäuseöffnung 13 ein zweites Ende 38 auf, das im vormontierten Zustand bezüglich des innenliegenden Ende 37 des Sperrelements 3 proximal angeordnet ist. Dieses zweite Ende 38 bildet dabei einen radial verlaufenden zweiten Rand der Gehäuseöffnung 13, der sich ebenfalls von der Innenseite des Gehäuses 2 direkt radial zur Außenseite des Gehäuses 2 erstreckt. Somit ist auch hier der zum innen liegenden Ende 37 proximale Rand der Gehäuseöffnung 13, also das zweite Ende 38 radial orientiert.

Zweckmäßig kann besagter zweiter Rand 38 bzw. das zweite Ende 38 der Gehäuseöffnung 13 einen Quersteg 39 aufweisen, der die Innennut 6 in der Umfangsrichtung zur Gehäuseöffnung 13 hin begrenzt. Der Quersteg 39 bildet dadurch einen Anschlag für das Sperrelement 3 in der Einschieberichtung 32.

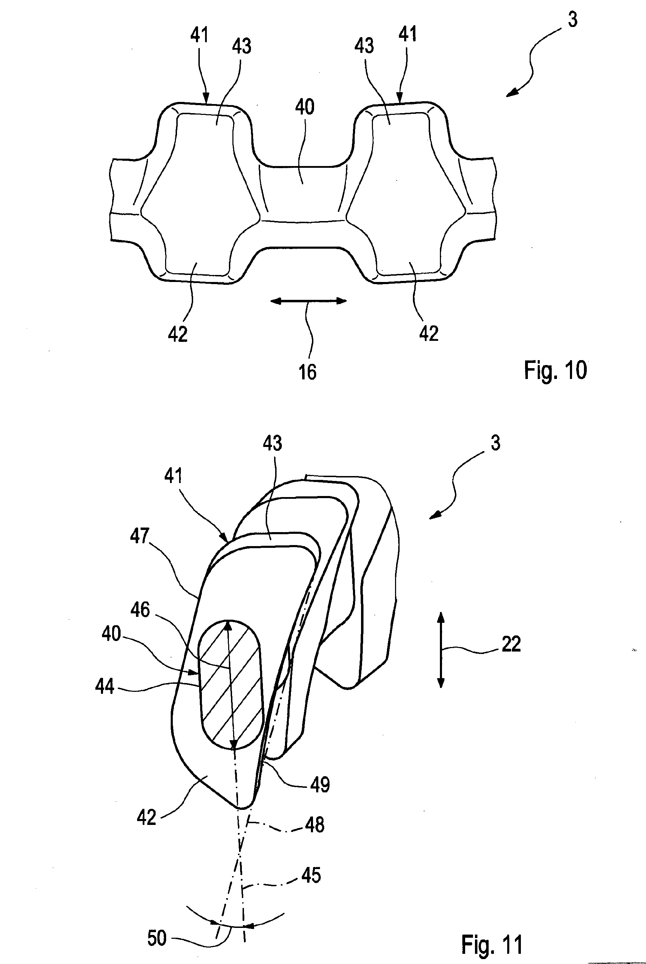

Wie insbesondere den Fig. 4, 10 und 11 zu entnehmen ist, besitzt das Sperrelement 3 bei den hier gezeigten Ausführungsformen eine bandförmige Seele 40 und mehrere Zähne 41, die in der Umfangsrichtung 16 zueinander benachbart und entlang der Seele 40 angeordnet sind. Die Zähne 41 weisen dabei jeweils einen äußeren Zahnabschnitt 42 sowie einen inneren Zahnabschnitt 43 auf. Im eingesteckten Zustand des Steckabschnitts 4 wirken die äußeren Zahnabschnitte 42 mit der Innennut 5 des Steckabschnitts 4 zusammen, während die inneren Zahnabschnitte 43 mit der Außennut 6 des Gehäuses 2 zusammenwirken. Diese inneren Zahnabschnitte 43 und die äußeren Zahnabschnitte 42 stehen von der Seele 40 an sich gegenüberliegenden Seiten ab. Dabei stehen sie von der Seele 40 gemäß Fig. 11 im Wesentlichen axial ab.

Die Seele 40 besitzt zumindest zwischen benachbarten Zähnen 41 entsprechend Fig. 1 im Querschnitt ein Seelenprofil 44, das eine Hauptrichtung 45 besitzt. Die Seelenhauptrichtung 45 wird dabei durch einen Maximaldurchmesser 46 des Seelenprofils 44 bestimmt bzw. definiert. Im Unterschied dazu besitzen die Zähne 41 im Querschnitt jeweils ein Zahnprofil 47, das eine Zahnhauptrichtung 48 aufweist, wobei diese Zahnhauptrichtung 48 durch eine radial innen liegende Zahnflanke 49 des jeweiligen Zahns 41 bestimmt bzw. definiert ist. Die Zahnhauptrichtung 48 entspricht dabei im Wesentlichen einer Geraden, an welcher besagte Innenflanke 49 an zumindest zwei Punkten oder flächig definiert zur Anlage kommt.

Das Sperrelement 3 ist entsprechend Fig. 11 nun so hergestellt, dass die Seelenhauptrichtung 45 mit der Zahnhauptrichtung 48 einen Winkel 50 einschließt. Mit anderen Worten, die Seelenhauptrichtung 45 ist gegenüber der Zahnhauptrichtung 48 geneigt. Erkennbar sind sowohl die Zahnhauptrichtung 48 als auch die Seelenhauptrichtung 45 gegenüber der Axialrichtung 22 geneigt. Vorzugsweise ist die Seelenhauptrichtung 45 dabei in Richtung zur Axialrichtung 22 gegenüber der Zahnhauptrichtung 48 geneigt. Vorzugsweise ist der Winkel 50 zwischen der Seelenhauptrichtung 45 und der Zahnhauptrichtung 48 so groß gewählt, dass die Axialrichtung 22 zwischen der Zahnhauptrichtung 48 und der Seelenhauptrichtung 45 liegt.

Entsprechend Fig. 2 besitzt das Sperrelement 3 den Endabschnitt 26, der im vormontierten Zustand außen am Gehäuse 2 anliegt. Die Dimensionierung des Sperrelements 3 ist in Umfangsrichtung 16 so groß gewählt, dass der außen liegende Endabschnitt 26 im vormontierten Zustand einen innen liegenden Endabschnitt 51 des Sperrelements, der das innen liegende Ende 37 aufweist und der in der Innennut 6 liegt, in der Umfangsrichtung 16 überlappt. Hierdurch ergibt sich eine radiale Überdeckung zwischen dem innen liegenden Endabschnitt 51 und dem außen liegenden Endabschnitt 26.

Der außen liegende Endabschnitt 26 kann gemäß Fig. 4 ein gegenüber der Seele 40 vergrößertes Profil aufweisen. Hierdurch wird die Griffigkeit des außen liegenden Endabschnitts 26 verbessert, was das manuelle Betätigen des Sicherungselements 3 zum Herausziehen aus den Nuten 5, 6 vereinfacht.

Entsprechend den Fig. 2 und 4 kann die Seele 40 zwischen dem außen liegenden Endabschnitt 26 und einem ersten Zahn 52 einen zahnlosen Seelenabschnitt 53 aufweisen, der so groß ist, dass er sich bis in die Innennut 6 hinein erstreckt. Gemäß Fig. 2 liegt der gesamte zahnlose Seelenabschnitt 53 innerhalb der Innennut 6.

Das Sperrelement 3 kann gemäß den Fig. 2 und 4 zwischen dem außen liegenden Endabschnitt 26 und den im Inneren des Gehäuses 2 bzw. in der Innennut 6 verlaufenden Bereich einen verwundenen Übergangsabschnitt 54 aufweisen. Dieser verwundene Übergangsabschnitt 54 zeichnet sich dadurch aus, dass sich in diesem Übergangsabschnitt 54 eine nicht näher bezeichnete Hauptrichtung des Sperrelementprofils ausgehend von einer parallel zur Seelenhauptrichtung 45 verlaufenden Orientierung in Richtung zum außen liegenden Endabschnitt 26 gegenüber der Axialrichtung 22 aufrichtet, und zwar vorzugsweise soweit, dass die Hauptrichtung des Sperrelementprofils im außen liegenden Endabschnitt 26 im Wesentlichen parallel zur Axialrichtung 22 orientiert ist. Hierdurch kann das Sperrelement 3 im Bereich seiner Seele 40 gegenüber der Axialrichtung 22 geneigt verlaufen, während es im Bereich des Endabschnitts 26 parallel zur Axialrichtung 22 verläuft. Dies ermöglicht eine besonders flache und kompakte Bauweise für die Anschlussvorrichtung 1.

Der in der Auszugsrichtung 18 erste Zahn 52 kann mit einer Einführschräge, die das Einführen des Sperrelements 3 in das Gehäuse 2 erleichtert und/oder eine Ausziehschräge aufweisen, die das Ausziehen des Sperrelements 3 aus dem Gehäuse 2 erleichtert. Zusätzlich oder alternativ kann ein in der Auszugsrichtung 18 letzter Zahn 55 eine das Einführen des Sperrelements 3 in das Gehäuse 2 erleichternde Einführschräge und/oder eine das Ausziehen des Sperrelements 3 aus dem Gehäuse 2 erleichternde Ausziehschräge aufweisen.

Wie insbesondere Fig. 11 entnehmbar ist, kann die Seele 40 bevorzugt bezüglich der inneren und äußeren Zahnabschnitte 42, 43 exzentrisch zu den Zähnen 41 angeordnet sein. Im Beispiel der Fig. 11 ist das Seelenprofil 44 gegenüber dem Zahnprofil 47 nach unten aus der Mitte verschoben. Dies entspricht einer Verschiebung oder Exzentrizität der Seele 40 in Richtung der äußeren Zahnabschnitte 42, die mit der Innennut 6 zusammenwirken. Hierdurch kann das Sperrelement 3 beim Einstecken des Steckabschnitts 4 leichter in die Innennut 6 elastisch ausweichen.

Bemerkenswert ist hier außerdem, dass zweckmäßig die Abmessungen in Umfangsrichtung 16 der Gehäuseöffnung 13, des zahnlosen Seelenabschnitts 53, des verwundenen Übergangsabschnitts 54 und des außen liegenden Endabschnitts 26 jeweils etwa gleich groß gewählt sind.

Ferner ist Fig. 10 entnehmbar, dass benachbarte Zähne 41 in der Umfangsrichtung 16 einen vergleichsweise großen Abstand voneinander aufweisen. Besagter Abstand entspricht etwa einer in Umfangsrichtung gemessenen Zahnbreite. Hierdurch ergibt sich eine besonders hohe Flexibilität und Stabilität für das Sperrelement 3.

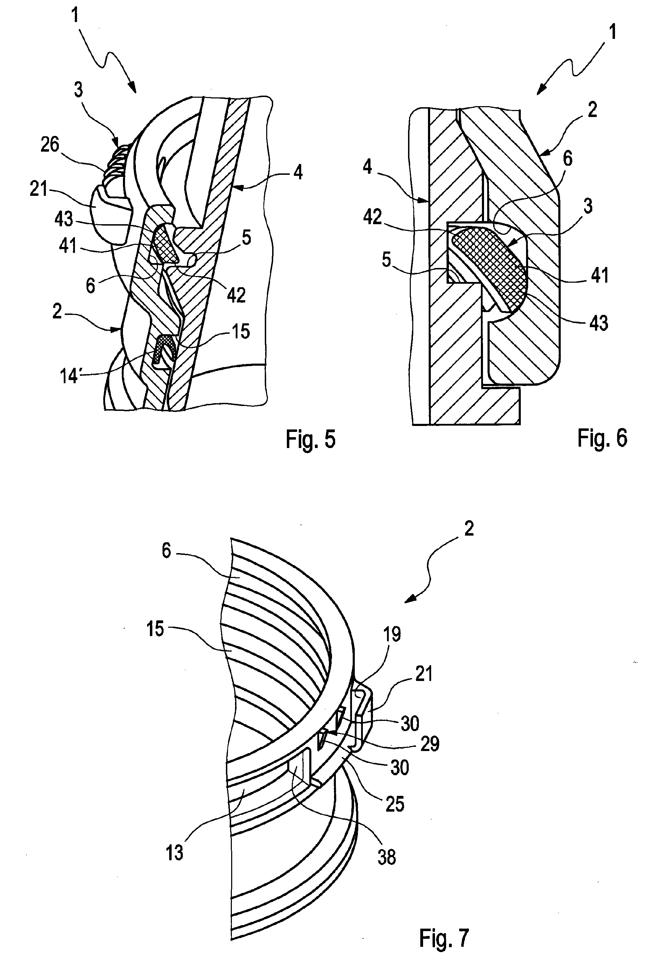

Den Fig. 5 und 6 ist entnehmbar, dass das Sperrelement 3, insbesondere im Hinblick auf seine inneren Zahnabschnitte 43 bevorzugt so geformt ist, dass mehrere unterschiedlich geformte Außennuten 5 hinreichend formschlüssig gesichert werden können. So zeigen die Fig. 5 und 6 zwei verschiedene Ausführungsformen für die Steckabschnitte 4 bzw. für die daran ausgebildeten Außennuten 5. Fig. 5 zeigt außerdem eine alternative Dichtung 14'.

Zweckmäßig kann das Sperrelement 3 aus Kunststoff spritzgeformt sein, wobei dieses Spritzformteil sowohl die Seele 40 als auch die Zähne 41 umfasst. Grundsätzlich kann das Sperrelement 3 dabei aus einem homogenen Kunststoff hergestellt werden, so dass die Seele 40 und die Zähne 41 keine Materialunterschiede aufweisen. Darüber hinaus ist es aber auch möglich, das Sperrelement 3 aus Kunststoff so herzustellen, dass es zumindest im Bereich der Seele 40 faserverstärkt sein kann, wobei sich die jeweiligen Verstärkungsfasern, wie z. B. Glasfasern oder Kohlefasern, vorzugsweise in der Umfangsrichtung erstrecken. Alternativ ist auch eine Ausführungsform denkbar, bei welcher das Sperrelement 3 dadurch hergestellt wird, dass die Zähne 41 an die Seele 40 angespritzt werden. Während die Zähne 41 vorzugsweise aus Kunststoff bestehen, kann die Seele 40 dann grundsätzlich ebenfalls aus Kunststoff, vorzugsweise aus einem anderen Kunststoff als die Zähne 41, oder aus einem anderen Material hergestellt sein. Entsprechendes gilt dann auch für den außen liegenden Endabschnitt 26, der ebenfalls an die Seele 40 angespritzt oder daran integral ausgeformt sein kann.

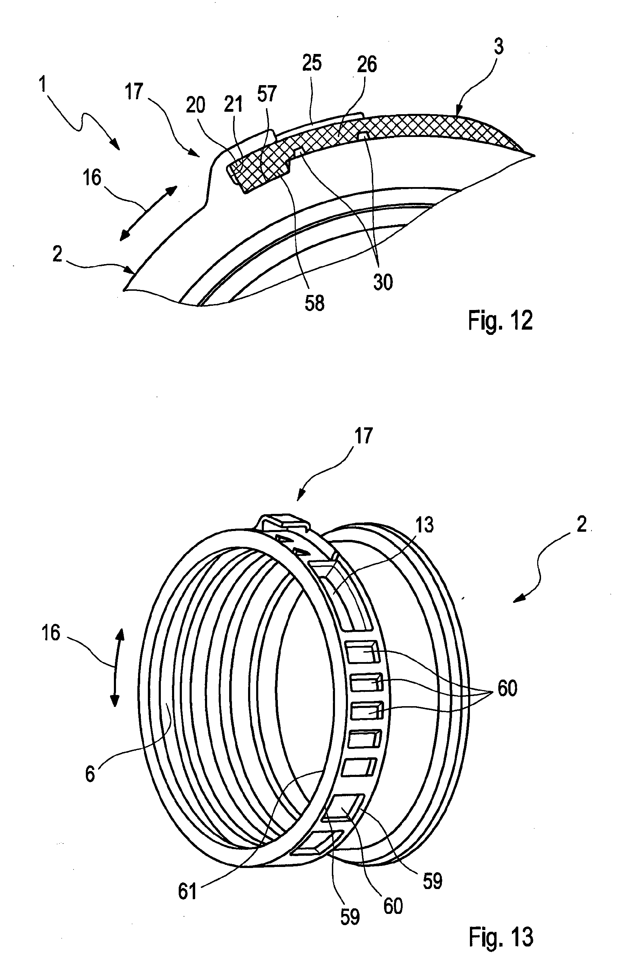

Sobald der Steckabschnitt 4 in die Anschlussvorrichtung 1 eingesteckt ist, sind das Gehäuse 2 und der Steckabschnitt 4 fluidisch miteinander verbunden. Hierdurch entsteht außerdem eine Anschlussanordnung 56, welche die Anschlussvorrichtung 1 und den darin eingesteckten Steckabschnitt 4 umfasst. Entsprechend Fig. 12 kann gemäß einer anderen Ausführungsform der Sicherungseinrichtung 17 außen am Gehäuse 2 eine Vertiefung 57 vorgesehen sein. Diese Vertiefung 57 ist dabei am Gehäuse 2 so angeordnet, dass ein Vorsprung 58, der am außenliegenden Ende 20 des Sperrelements 3 nach innen absteht, in diese Vertiefung 57 eingreift. Hierdurch ergibt sich eine zusätzliche Fixierung des Sperrelements 3 in der Umfangsrichtung 16. Darüber hinaus ermöglicht der Vorsprung 58 ein vereinfachtes manuelles Herausziehen des Sperrelements 3 zum Lösen der Verbindung der Anschlussvorrichtung 1.

Im gezeigten Beispiel befindet sich die Vertiefung 57 innerhalb der Aufnahmetasche 21, so dass sie radial überlappt ist.

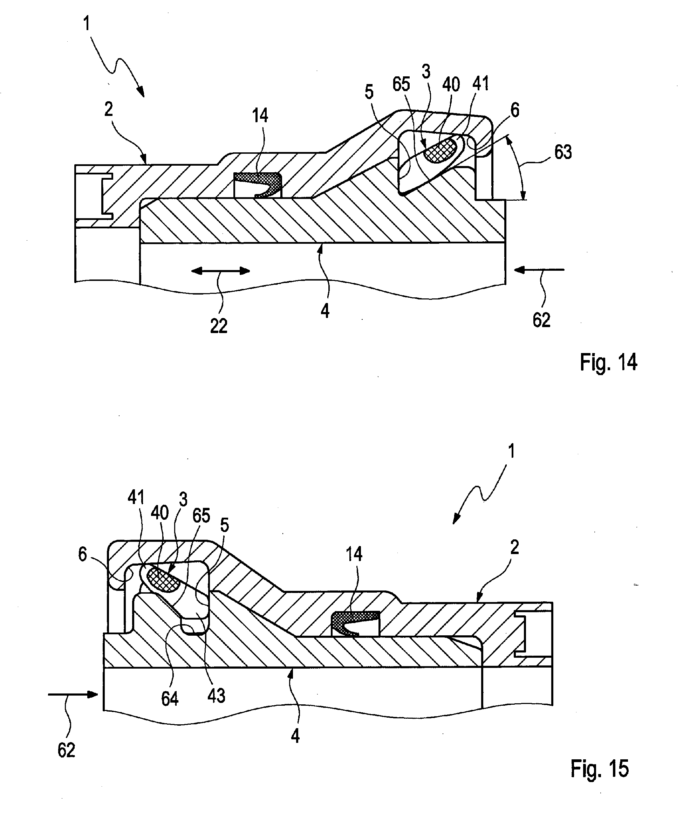

Entsprechend Fig. 13 kann das Gehäuse 2 mit Hilfe wenigstens einer Umfangsrippe 59 versteift sein. Die jeweilige Umfangsrippe 59 erstreckt sich dabei in der Umfangsrichtung 16, zweckmäßig ringförmig geschlossen. Die jeweilige Umfangsrippe 59 ist dabei außen am Gehäuse 2 angeordnet. Im Beispiels sind zwei derartige Umfangsrippen 59 vorgesehen, die zueinander axial beabstandet angeordnet sind. Darüber hinaus sind im Beispiel auch mehrere Längsrippen 60 vorgesehen, die ebenfalls außen am Gehäuse 2 angeordnet sind und sich dabei in der Längsrichtung des Gehäuses 2 erstrecken. Zweckmäßig sind die Längsrippen 60 dabei so dimensioniert, dass sie die beiden Umfangsrippen 59 miteinander verbinden. Die eine, in Fig. 13 dem Betrachter zugewandte Umfangsrippe 59 ist am freien Ende des Gehäuse 2 angeordnet, das eine Einstecköffnung 61 zum Einstecken des Steckabschnitts 4 aufweist. Ferner sind die beiden Umfangsrippen 59 am Gehäuse 2 hier bevorzugt so positioniert, dass sie sich axial beiderseits der Innennut 6 befinden, so dass die Innennut 6 axial zwischen den beiden Umfangsrippen 59 positioniert ist. Hierdurch wird das Gehäuse 2 im Bereich der Innennut 6 ausgesteift. Entsprechend den Fig. 14 bis 17 kann die Außennut 5 des Steckabschnitts 4 quer zur Umfangsrichtung 16, also in der Axialrichtung 22 oder Längsrichtung 22 ein Rampenprofil 65 aufweisen. Das Rampenprofil 65 ist dabei so orientiert, dass es in einer durch einen Pfeil angedeuteten Einsteckrichtung 62 des Steckabschnitts 4 abfällt. Die Einsteckrichtung 62 definiert dabei die Relativbewegung des Steckabschnitts 4 relativ zum Gehäuse 2 beim Einstecken des Steckabschnitts 4 in das Gehäuse 2.

Durch die Rampenform der Außennut 5 soll die Gefahr reduziert werden, dass sich die Zähne 41 des Sperrelements 3 bei einer Zugkraft zwischen Steckabschnitt 4 und Gehäuse 2 zu sehr aufrichten, was zu großen radialen Kräften führen würde. Das Rampenprofil 65 bewirkt, dass die Zähne 41 weitgehend in einer vorbestimmten Ausrichtung bleiben und abgestützt sind. Beispielsweise besitzt das Rampenprofil 65 einen Rampenwinkel 63, der maximal 45° beträgt.

Bei der in Fig. 15 gezeigten Ausführungsform ist die Außennut 5 geometrisch so geformt, dass sie an einem innenliegenden Ende des Rampenprofils 65 eine Vertiefung 64 aufweist. Diese Vertiefung 64 ist dabei zweckmäßig so dimensioniert, dass die Zähne 41 des Sperrelements 3 in der Vertiefung 64 bzw. im Bereich der Vertiefung 64 radial freistehend angeordnet sind. Das heißt, die inneren Zahnabschnitte 43 der Zähne 41 können zum Teil in die Vertiefung 64 hineinragen, sind jedoch gegenüber dem radial innenliegenden Grund der Vertiefung 64 radial beabstandet. Diese Bauform hat zur Folge, dass sich die Zähne 41 radial nur am Rampenprofil 65 abstützen können, so dass die Tendenz zur Aufrichtung der Zähne 41 zusätzlich reduziert ist.

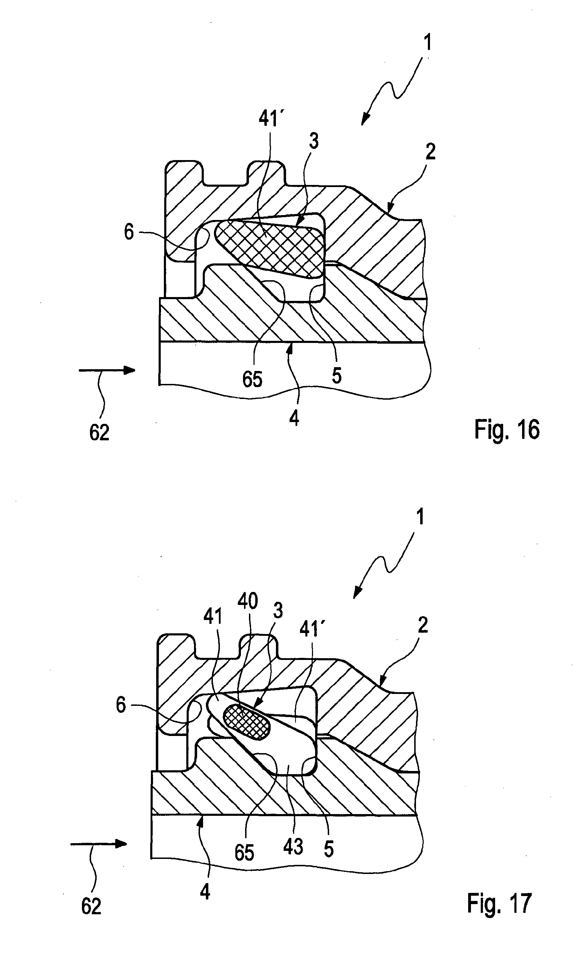

Entsprechend den Fig. 16 und 17 kann gemäß einer besonders vorteilhaften Ausführungsform zumindest ein "spezieller" Zahn 41' gegenüber den anderen "normalen" Zähnen 41 hinsichtlich seiner Geometrie und/oder hinsichtlich seiner Ausrichtung gegenüber der Seele 40 unterschiedlich sein, also einen anderen Winkel zwischen Zahnhauptrichtung 48 und Seelenhauptrichtung 45 aufweisen. Im gezeigten Bespiel der Fig. 16 und 17 ist besagter spezieller Zahn 41' sowohl hinsichtlich seiner Geometrie als auch hinsichtlich seiner Ausrichtung gegenüber der Seele 40 unterschiedlich gegenüber den anderen normalen Zähnen 41. Zweckmäßig können entlang des Sperrelements 3 mehrere derartige spezielle Zähne 41' vorgesehen sein, jedoch insgesamt weniger als die Hälfte aller Zähne 41, 41'. Beispielsweise sind nur 10% oder maximal 10% der Zähne 41, 41' von den übrigen normalen Zähnen 41 abweichend gestaltet bzw. angeordnet. Diese unterschiedlichen speziellen Zähne 41' sind dabei zweckmäßig in der Umfangsrichtung vorzugsweise gleichförmig beabstandet zueinander entlang des Sperrelements 3 verteilt angeordnet.

Wie den Fig. 16 und 17 entnehmbar ist, ist der jeweilige spezielle Zahn 41' so gestaltet bzw. angeordnet, dass er sich im vormontierten Zustand und insbesondere auch im eingesteckten Zustand in der Einsteckrichtung 62 in der Innennut 6 axial am Gehäuse 2 abstützt. Hierdurch wird beim Einstecken verhindert, dass sich das Sperrelement 3 axial relativ zum Gehäuse 2 verschiebt, derart, dass die anderen normalen Zähne 41 mit ihren inneren Zahnabschnitten 43 axial über die Innennut 6 vorstehen und dadurch zwischen dem Gehäuse 2 und dem Steckabschnitt 4 verklemmen können. Insbesondere lässt sich Fig. 17 gut entnehmen, dass sich im vormontierten Zustand bzw. in eingestecktem Zustand die normalen Zähne 41 mit ihrem inneren Zahnabschnitt 43 ausschließlich in der Außennut 5 am Steckabschnitt 4 axial abstützen, während sich die speziellen Zähne 41' an der Innennut 6 am Gehäuse 2 und im Beispiel außerdem in der Außennut 5 am Steckabschnitt 4 axial abstützen.

## Patentansprüche

1. Anschlussvorrichtung für einen eine ringförmige Außennut (5) aufweisenden Steckabschnitt (4) einer schlauchförmigen oder rohrförmigen Leitung oder eines Stutzens,
- mit einem Gehäuse (2), in welches der Steckabschnitt (4) einsteckbar ist,
- mit einem Sperrelement (3), mit dem der in das Gehäuse (2) eingesteckte Steckabschnitt (4) im Gehäuse (2) arretierbar ist,
- wobei das Sperrelement (3) zum Arretieren des Steckabschnitts (4) im Gehäuse (2) in die Außennut (5) und in eine im Gehäuse (2) ausgebildete ringförmige Innennut (6) eingreift,
- wobei das Sperrelement (3) durch eine Gehäuseöffnung (13) im Wesentlichen tangential zu den Nuten (5, 6) aus diesen herausziehbar ist,
- wobei das Sperrelement (3) in der Innennut (6) vormontierbar ist und im vormontierten Zustand unter elastischer Auslenkung das Einstecken des Steckabschnitts (4) in das Gehäuse (2) erlaubt und dabei in die Außennut (5) einrastet,
- wobei das Sperrelement (3) eine bandförmige Seele (40) und mehrere in der Umfangsrichtung (16) benachbarte, entlang der Seele (40) angeordnete Zähne (41) aufweist, die jeweils einen im vormontierten Zustand mit der Innennut (6) zusammenwirkenden äußeren Zahnabschnitt (42) und einen im eingesteckten Zustand mit der Außennut (5) zusammenwirkenden inneren Zahnabschnitt (43) aufweisen,
- wobei die inneren und äußeren Zahnabschnitte (42, 43) an sich gegenüberliegenden Seiten von der Seele (40) abstehen,
- wobei die Seele (40) zumindest zwischen benachbarten Zähnen (41) im Querschnitt ein Seelenprofil (44) aufweist, das eine durch einen Maximaldurchmesser (46) bestimmte Seelenhauptrichtung (45) aufweist,
- wobei die Zähne (41) im Querschnitt jeweils ein Zahnprofil (47) aufweisen, das einen durch eine radial innen liegende Innenflanke (49) der Zähne (41) bestimmte Zahnhauptrichtung (48) aufweist,
**dadurch gekennzeichnet,**
**dass** die Seelenhauptrichtung (45) gegenüber der Zahnhauptrichtung (48) geneigt ist.

2. Anschlussvorrichtung nach Anspruch 1,
**dadurch gekennzeichnet,**
**dass** die Zahnhauptrichtung (48) gegenüber einer Axialrichtung (22) geneigt ist, wobei die Seelenhauptrichtung (45) in Richtung zur Axialrichtung (22) gegenüber der Zahnhauptrichtung (48) geneigt ist.

3. Anschlussvorrichtung nach Anspruch 1 oder 2,
**dadurch gekennzeichnet,**
**dass** das Sperrelement (3) einen im vormontierten Zustand außen am Gehäuse (2) anliegenden außen liegenden Endabschnitt (26) aufweist.

4. Anschlussvorrichtung nach Anspruch 3,
**dadurch gekennzeichnet,**
**dass** der außen liegende Endabschnitt (26) im vormontierten Zustand einen in der Innennut (6) verlaufenden, innen liegenden Endabschnitt (51) des Sperrelements (3) in der Umfangsrichtung (16) überlappt.

5. Anschlussvorrichtung nach Anspruch 3 oder 4,
**dadurch gekennzeichnet, dass** der außen liegende Endabschnitt (26) ein gegenüber der Seele (40) vergrößertes Querschnittsprofil aufweist.

6. Anschlussvorrichtung nach einem der Ansprüche 3 bis 5,
**dadurch gekennzeichnet,**
**dass** die Seele (40) zwischen dem außen liegenden Endabschnitt (26) bis zum ersten Zahn (52) einen sich bis in die Innennut (6) hinein erstreckenden zahnlosen Seelenabschnitt (53) aufweist.

7. Anschlussvorrichtung nach einem der Ansprüche 3 bis 6,
**dadurch gekennzeichnet,**
**dass** das Sperrelement (3) zwischen dem außen liegenden Endabschnitt (26) und dem in der Innennut (5) verlaufenden Bereich einen verwundenen Übergangsabschnitt (54) aufweist, in dem sich die Hauptrichtung des Sperrelementprofils ausgehend von der Seelenhauptrichtung (45) in Richtung zum außen liegenden Endabschnitt (26) gegenüber der Axialrichtung (22) aufrichtet.

8. Anschlussvorrichtung nach Anspruch 7,
**dadurch gekennzeichnet,**
**dass** sich die Hauptrichtung des Sperrelementprofils im außen liegenden Endabschnitt (26) im Wesentlichen parallel zur Axialrichtung (22) erstreckt.

9. Anschlussvorrichtung nach einem der Ansprüche 1 bis 8,
**dadurch gekennzeichnet,**
**dass** ein in der Auszugsrichtung erster Zahn (52) und/oder ein in der Auszugsrichtung (18) letzter Zahn (55) eine das Einführen des Sperrelements (3) erleichternd Einführschräge und/oder eine das Ausziehen des Sperrelements (3) erleichternde Ausziehschräge aufweist/aufweisen.

10. Anschlussvorrichtung nach einem der Ansprüche 1 bis 9,
**dadurch gekennzeichnet,**
- **dass** die Seele (40) bezüglich der inneren und äußeren Zahnabschnitte (42, 43) exzentrisch zu den Zähnen (41) angeordnet ist, wobei insbesondere vorgesehen sein kann, dass die Seele (40) in Richtung der äußeren Zahnabschnitte (42) versetzt angeordnet ist, und/oder
- **dass** benachbarte Zähne (41) in der Umfangsrichtung (16) etwa eine in Umfangsrichtung gemessene Zahnbreite voneinander beabstandet sind,

11. Anschlussvorrichtung nach einem der Ansprüche 1 bis 10,
**dadurch gekennzeichnet,**
**dass** außen am Gehäuse (2) eine Abdeckung (35) vorgesehen ist, welche die Gehäuseöffnung (13) radial abdeckt, wobei insbesondere vorgesehen sein kann, dass die Abdeckung (35) außerdem einen im vormontierten Zustand außen am Gehäuse (2) anliegenden außen liegenden Endabschnitt (26) des Sperrelements (3) radial abdeckt.

12. Anschlussvorrichtung nach dem Oberbegriff des Anspruchs 1, insbesondere nach einem der Ansprüche 1 bis 11,
**dadurch gekennzeichnet,**
**dass** zumindest ein Zahn (41') vorgesehen ist, der gegenüber den anderen Zähnen (41) hinsichtlich seiner Geometrie und/oder hinsichtlich seiner Ausrichtung gegenüber der Seele (40) unterschiedlich ist, wobei insbesondere vorgesehen sein kann, dass der wenigstens eine Zahn (41') so gestaltet und/oder angeordnet ist, dass er sich im vormontierten Zustand in der Einsteckrichtung (62) des Steckabschnitts (4) in der Innennut (6) axial abstützt, wobei insbesondere vorgesehen sein kann, dass der wenigstens eine Zahn (41') so gestaltet und/oder angeordnet ist, dass er sich im eingesteckten Zustand mit seinem inneren Zahnabschnitt (43) in der Innennut (6) abstützt, während sich die anderen Zähne (41) mit ihren Innenabschnitten (43) in der Außennut (5) abstützen.

13. Anschlussvorrichtung nach einem der Ansprüche 1 bis 12,
**dadurch gekennzeichnet,**
**dass** die Außennut (5) quer zur Umfangsrichtung (16) ein Rampenprofil (65) aufweist, das in der Einsteckrichtung (62) des Steckabschnitts (4) abfällt.

14. Anschlussvorrichtung nach Anspruch 13,
**dadurch gekennzeichnet,**
**dass** die Außennut (5) an einem innenliegenden Ende des Rampenprofils (65) eine Vertiefung (64) aufweist, die so dimensioniert ist, dass die Zähne (41) mit ihren inneren Zahnabschnitten (43) in der Vertiefung (64) radial freistehend angeordnet sind, wobei insbesondere vorgesehen sein kann, dass die Vertiefung (64) im Profil kleiner dimensioniert ist als die inneren Zahnabschnitte (43).

15. Anschlussvorrichtung nach einem der Ansprüche 1 bis 14,
**dadurch gekennzeichnet,**
- **dass** das Gehäuse (2) außen zumindest eine sich in Umfangsrichtung (16) erstreckende Umfangsrippe (59) aufweist,
- wobei insbesondere vorgesehen sein kann, dass die wenigstens eine Umfangsrippe (59) an einem die Einstecköffnung (61) zum Einstecken des Steckabschnitts (4) aufweisenden Ende des Gehäuses (2) angeordnet ist,
- wobei insbesondere vorgesehen sein kann, dass zumindest zwei axial voneinander beabstandete Umfangsrippen (59) vorgesehen sind,
- wobei insbesondere vorgesehen sein kann, dass die Innennut (6) axial zwischen zwei solchen Umfangsrippen (59) angeordnet ist,
- wobei insbesondere vorgesehen sein kann, dass das Gehäuse (2) außen mehrere sich in Längsrichtung (22) erstreckende Längsrippen (60) aufweist, die jeweils zumindest zwei Umfangsrippen (59) miteinander verbinden.

## Claims

1. A connection device for an insertion section (4) of a tubular or pipe-shaped conduit or of a connection piece, said insertion section having an annular outer groove (5),
- with a housing (2), into which the insertion section (4) is able to be inserted,
- with a blocking element (3), with which the insertion section (4), once inserted into the housing (2), can be locked in the housing (2),
- wherein the blocking element (3) for locking the insertion section (4) in the housing (2) engages into the outer groove (5) and into an annular inner groove (6) formed in the housing (2),
- wherein the blocking element (3) is able to be withdrawn through a housing opening (13) substantially tangentially to the grooves (5, 6) from the latter,
- wherein the blocking element (3) can be pre-fitted in the inner groove (6) and in the pre-fitted state allows, with elastic deflection, the insertion of the insertion section (4) into the housing (2), said element thus engaging in the outer groove (5),
- wherein the blocking element (3) has a band-shaped core (40) and a plurality of teeth (41) arranged adjacent in peripheral direction (16) along the core (40), which have respectively an outer tooth section (42) interacting with the inner groove (6) in the pre-fitted state and an inner tooth section (43) interacting with the outer groove (5) in the inserted state,
- wherein the inner and outer tooth sections (42, 43) protrude from the core (40) on opposite sides,
- wherein the core (40) has a core profile (44) in cross-section at least between adjacent teeth (41), which core profile has a core principal direction (45) determined by a maximum diameter (46),
- wherein the teeth (41) in cross-section respectively have a tooth profile (47) which has a tooth principal direction (48) determined by an inner flank (49) of the teeth (41) lying radially on the interior,
**characterized in that**
the core principal direction (45) is inclined with respect to the tooth principal direction (48).

2. The connection device according to Claim 1, **characterized in that**
the tooth principal direction (48) is inclined with respect to an axial direction (22), wherein the core principal direction (45) is inclined with respect to the tooth principal direction (48) in the direction towards the axial direction (22).

3. The connection device according to Claim 1 or 2, **characterized in that**
the blocking element (3) has an end section (26), lying on the exterior, lying on the outside of the housing (2) in the pre-fitted state.

4. The connection device according to Claim 3, **characterized in that**
the end section (26), lying on the exterior, overlaps in the pre-fitted state an end section (51) of the blocking element (3) lying on the interior, in the peripheral direction (16), running in the inner groove (6).

5. The connection device according to Claim 3 or 4, **characterized in that**
the end section (26), lying on the exterior, has a cross-sectional profile which is enlarged with respect to the core (40).

6. The connection device according to one of Claims 3 to 5,
**characterized in that**
the core (40) has a toothless core section (53) extending into the inner groove (6) between the end section (26), lying on the exterior, up to the first tooth (52).

7. The connection device according to one of Claims 3 to 6,
**characterized in that**
the blocking element (3) has a twisted transition section (54) between the end section (26), lying on the exterior, and the region running in the inner groove (5), in which transition section the principal direction of the blocking element profile straightens itself with respect to the axial direction (22) starting from the core principal direction (45) in the direction towards the end section (26) lying on the exterior.

8. The connection device according to Claim 7, **characterized in that**
the principal direction of the blocking element profile in the end section (26), lying on the exterior, extends substantially parallel to the axial direction (22).

9. The connection device according to one of Claims 1 to 8,
**characterized in that**
a first tooth (52) in the withdrawal direction and/or a last tooth (55) in the withdrawal direction (18) has/have an introduction bevel facilitating the introduction of the blocking element (3) and/or a withdrawal bevel facilitating the withdrawal of the blocking element (3).

10. The connection device according to one of Claims 1 to 9,
**characterized in that**
- the core (40) is arranged eccentrically to the teeth (41) with regard to the inner and outer tooth sections (42, 43), wherein in particular provision can be made that the core (40) is arranged offset in the direction of the outer tooth sections (42), and/or
- that adjacent teeth (41) are spaced apart from each other in the peripheral direction (16) by approximately one tooth width measured in the peripheral direction.

11. The connection device according to one of Claims 1 to 10,
**characterized in that**
on the outside of the housing (2) a cover (35) is provided, which covers the housing opening (13) radially, wherein in particular provision can be made that the cover (35) in addition covers radially an end section (26) of the blocking element (3), lying on the exterior, lying outside the housing (2) in the pre-fitted state.

12. The connection device according to the introductory clause of Claim 1, in particular according to one of Claims 1 to 11,
**characterized in that**
at least one tooth (41') is provided, which is different with respect to the other teeth (41) with regard to its geometry and/or with regard to its alignment with respect to the core (40), wherein in particular provision can be made that the at least one tooth (41') is configured and/or arranged so that it rests axially in the pre-fitted state in the insertion direction (62) of the insertion section (4) in the inner groove (6), wherein in particular provision can be made that the at least one tooth (41') is configured and/or arranged so that it rests in the inserted state with its inner tooth section (43) in the inner groove (6), whilst the other teeth (41) rest with their inner sections (43) in the outer groove (5).

13. The connection device according to one of Claims 1 to 12,
**characterized in that**
transversely to the peripheral direction (16) the outer groove (5) has a ramp profile (65), which slopes down in the insertion direction (62) of the insertion section (4).

14. The connection device according to Claim 13, **characterized in that**
the outer groove (5) has a depression (64) at an end of the ramp profile (65) lying on the interior, which depression is dimensioned so that the teeth (41) are arranged standing freely radially with their inner tooth sections (43) in the depression (64), wherein in particular provision can be made that the depression (64) is dimensioned smaller in the profile than the inner tooth sections (43).

15. The connection device according to one of Claims 1 to 14,
**characterized in that**
- the housing (2) has externally at least one peripheral rib (59) extending in peripheral direction (16),
- wherein in particular provision can be made that the at least one peripheral rib (59) is arranged at an end of the housing (2) having the insertion opening (61) for the insertion of the insertion section (4),
- wherein in particular provision can be made that at least two peripheral ribs (59) are provided spaced apart from each other axially,
- wherein in particular provision can be made that the inner groove (6) is arranged axially between two such peripheral ribs (59),
- wherein in particular provision can be made that the housing (2) has externally several longitudinal ribs (60) extending in longitudinal direction (22), which respectively connect at least two peripheral ribs (59) with each other.

## Revendications

1. Dispositif de raccordement pour une portion d'enfichage (4) présentant une rainure externe annulaire (5) d'une conduite en forme de flexible ou en forme de tuyau ou d'un embout,
- avec un logement (2), dans lequel la portion d'enfichage (4) peut être enfichée,
- avec un élément de blocage (3), avec lequel la portion d'enfichage (4) enfichée dans le logement (2) peut être arrêtée dans le logement,
- dans lequel l'élément de blocage (3) s'engage pour arrêter la portion d'enfichage (4) dans le logement (2) dans la rainure externe (5) et dans une rainure interne (6) annulaire réalisée dans le logement (2),
- dans lequel l'élément de blocage (3) par l'intermédiaire d'une ouverture de logement (13) essentiellement tangentielle aux rainures (5,6) peut être extrait de celles-ci,
- dans lequel l'élément de blocage (3) peut être prémonté dans la rainure interne (6) et en l'état prémonté permet sous déviation élastique l'enfichage de la portion enfichable (4) dans le logement (2) et s'encliquète ainsi dans la rainure externe (5),
- dans lequel l'élément de blocage (3) présente une âme en forme de bande (40) et plusieurs dents (41) voisines dans la direction circonférentielle (16), disposées le long de l'âme (40), qui présentent respectivement dans l'état prémonté une portion de dent externe (42) coopérant avec la rainure intérieure (6) et une portion de dent interne (43) coopérant en l'état monté avec la rainure externe (5),
- dans lequel les portions de dent interne et externe (42,43) dépassent sur des côtés opposés de l'âme (40),
- dans lequel l'âme (40) présente au moins entre des dents voisines (41) un section transversale un profil d'âme (44), qui présente une direction principale d'âme (45) induite par un diamètre maximal (46),
- dans lequel les dents (41) présentent en section transversale respectivement un profil de dent (47), qui présente une direction principale de dent (48) induite par un flanc interne (49) des dents (41), situé radialement à l'intérieur,
**caractérisé en ce que** la direction principale d'âme (45) est inclinée par rapport à la direction principale de dent (48).

2. Dispositif de raccordement selon la revendication 1, **caractérisé en ce que** la direction principale de dent (48) est inclinée par rapport à une direction axiale (22), dans lequel la direction principale d'âme (45) est inclinée dans la direction axiale (22) par rapport à la direction principale de dent (48).

3. Dispositif de raccordement selon les revendications 1 ou 2, **caractérisé en ce que** l'élément de blocage (3) présente une portion d'extrémité (26) située à l'extérieur venant reposer à l'extérieur sur le logement (2) en l'état prémonté.

4. Dispositif de raccordement selon la revendication 3, **caractérisé en ce que** la portion d'extrémité (26) située à l'extérieur chevauche dans la direction circonférentielle (16) en l'état prémonté une portion d'extrémité (51) située à l'intérieur, s'étendant dans la rainure interne (6) de l'élément de blocage (3).

5. Dispositif de raccordement selon les revendications 3 ou 4, **caractérisé en ce que** la portion d'extrémité (26) située à l'extérieur présente un profil de section transversale agrandi par rapport à l'âme (40).

6. Dispositif de raccordement selon une des revendications 3 à 5, **caractérisé en ce que** l'âme présente entre la portion d'extrémité (26) située à l'extérieur jusqu'à la première dent (52) une portion d'âme (53) exempte de dents s'étendant à l'intérieur jusque dans la rainure interne (6).

7. Dispositif de raccordement selon une des revendications 3 à 6, **caractérisé en ce que** l'élément de blocage (3) présente entre la portion d'extrémité (26) situé à l'extérieur et la zone s'étendant dans la rainure interne (3) une portion de transition (54) chantournée, dans laquelle se dresse la direction principale du profil d'élément de blocage en partant de la direction principale d'âme (45) dans la direction de la portion d'extrémité (26) située à l'extérieur par rapport à la direction axiale (22).

8. Dispositif de raccordement selon la revendication 7, **caractérisé en ce que** la direction principale du profil d'élément de blocage s'étend dans la portion d'extrémité (26) située à l'extérieur essentiellement parallèlement à la direction axiale (22).

9. Dispositif de raccordement selon une des revendications 1 à 8, **caractérisé en ce que** une première dent (52) dans la direction de déploiement et/ou une dernière dent (55) dans la direction de déploiement (18) présente /présentent un chanfrein d'insertion facilitant l'insertion de l'élément de blocage (3) et/ou un chanfrein d'extraction facilitant l'extraction de l'élément de blocage (3).

10. Dispositif de raccordement selon une des revendications 1 à 9, **caractérisé en ce que**
- l'âme (40) en ce qui concerne les portions de dent interne et externe (42,43) est disposée de manière excentrée par rapport aux dents (41), dans lequel il peut notamment être prévu que l'âme (40) soit disposée en décalage dans la direction des portions de dent (42) externes, et/ou
- les dents voisines (41) dans la direction circonférentielle (16) sont espacées l'une de l'autre approximativement d'une largeur de dent mesurée dans la direction circonférentielle.

11. Dispositif de raccordement selon une des revendications 1 à 10, **caractérisé en ce que** un couvercle (35) est prévu à l'extérieur sur le logement (2), qui recouvre radialement l'ouverture de logement (13), dans lequel il peut notamment être prévu que le couvercle (35) recouvre en outre radialement en l'état prémonté une portion d'extrémité (26) de l'élément de blocage (3) située à l'extérieur, venant reposer à l'extérieur sur le logement (2).

12. Dispositif de raccordement selon le préambule de la revendication 1, notamment selon une des revendications 1 à 11, **caractérisé en ce que** au moins une dent (41') est prévue, qui est différente des autres dents (41) en ce qui concerne sa géométrie et/ou son alignement par rapport à l'âme (40), dans lequel il peut notamment être prévu, que au moins une dent (41') soit formée et/ou disposée de telle sorte qu'elle s'appuie axialement en l'état prémonté dans la direction d'enfichage (62) de la portion d'enfichage (4) dans la rainure interne (6), dans lequel il peut notamment être prévu que au moins une dent (41') soit formée et/ou disposée de telle sorte qu'en l'état enfiché elle s'appuie par sa portion de dent interne (43) dans la rainure interne (6), pendant que les autres dents (41) s'appuient par leurs portions internes (43) dans la rainure externe (5).

13. Dispositif de raccordement selon une des revendications 1 à 12, **caractérisé en ce que** la rainure externe (5) présente transversalement à la direction circonférentielle (16) un profil de rampe (65), qui chute dans la direction d'insertion (62) de la portion d'enfichage (4).

14. Dispositif de raccordement selon la revendication 13, **caractérisé en ce que** la rainure externe (5) présente à une extrémité située à l'intérieur du profil de rampe (65) un évidement (64), qui est dimensionné de telle sorte que les dents (41) soient disposées isolément radialement par leurs portions de dent (43) internes dans l'évidement (64), dans lequel il peut notamment être prévu que l'évidement (64) ait des dimensions plus petites de profil que les portions de dent internes (43).

15. Dispositif de raccordement selon une des revendications 1 à 14, **caractérisé en ce que**
- le dispositif (2) présente à l'extérieur au moins une nervure circonférentielle (59) s'étendant dans la direction circonférentielle (16),
- dans lequel il peut notamment être prévu qu'au moins une nervure circonférentielle (59) soit disposée sur une extrémité du logement (2) présentant l'ouverture d'enfichage (61) pour enficher la portion enfichable (4),
- dans lequel il peut notamment être prévu qu'au moins deux nervures circonférentielles (59) espacées axialement l'une de l'autre sont prévues,
- dans lequel il peut notamment être prévu que la rainure interne (6) soit disposée axialement entre deux telles nervures circonférentielles (59),
- dans lequel il peut notamment être prévu que le logement (2) présente à l'extérieur plusieurs nervures longitudinales (60) s'étendant dans la direction longitudinale (22), qui relient l'une à l'autre au moins deux nervures circonférentielles (59).
